# EUROPEAN PATENT APPLICATION

(11) **EP 2 966 128 A1**
(43) Date of publication of application: **13.01.2016**
(21) Application number: 14175914.2
(22) Date of filing: 07.07.2014
(51) Int. Cl.: C08L 95/00

(54) **Method of rejuvenating recycled asphalt compositions and oil compositions for use in the method**

(71) Applicant: Akzo Nobel Chemicals International B.V., 3811 MH Amersfoort (NL)
(72) Inventor: Gorsuch, Christine, Wappinger Falls, New York 12590 (US); Franklin, Ralph, Danbury, Connecticut 06811 (US); Lewis, Kacie, Danbury, Connecticut 06810 (US); Logaraj, Sundaram, Aurora, Illinois 60504 (US); James, Alan Duncan, Chicago, Illinois 60680 (US)
(74) Representative: Akzo Nobel IP Department

(57) **Abstract**

This invention relates to a method of preparing a recycled asphalt pavement composition, wherein pavement mix comprising recycled asphalt pavement materials and/or recycled asphalt shingle materials is mixed with a rejuvenating composition comprising a rejuvenating oil and an alkoxylated fatty amine surfactant additive. The use of the alkoxylated fatty amine surfactant allows for the use of less of the rejuvenating oil in the pavement composition, preserves the softening effect of the rejuvenating oil, and slows the aging of the recycled asphalt pavement composition.

In another aspect, the invention relates to an oil composition for use in the preparation of a recycled asphalt pavement composition, the oil composition comprising a rejuvenating oil and a proportion of alkoxylated fatty amine surfactant. The rejuvenating oil may be selected from blends of fatty esters, plant oils, and hydrocarbon oils.

## Description

This invention relates to methods of rejuvenating recycled asphalt materials comprising recycled asphalt pavement and/or recycled asphalt shingle materials, wherein the products made by the methods have improved softening and improved aging properties. This invention also relates to oil compositions for use in such methods.

### Background of the Invention

The use of recycled asphalt pavement (RAP) is increasing in Canada and the United States driven by benefits in material costs, energy costs and the preservation of natural resources. In 2012 an estimated 68.3 million tons of RAP was consumed in North America representing a savings of 3.4 million tons of binder or $2 billion. Crushed recycled asphalt pavement material has attached to it aged binder used in the preparation of the original asphalt pavement. This aged binder can be hard, which prevents good mixing in a recycled asphalt composition. It is known in the art to use rejuvenating or recycling oils to soften the aged asphalt binder that is attached to the crushed RAP to facilitate its incorporation into new asphalt mixes. Recycling oils can be petroleum based or derived from renewable sources, such as natural fats and oils, and their derivatives. There are several mechanisms by which the rejuvenators may work: by softening the RAP binder, by facilitating the blending of the RAP and virgin binders, and by restoring some of the asphalt components lost during aging. Potentially some rejuvenators may reduce further asphalt oxidation or maintain viscosity reduction by dispersion of asphaltenes.

Rejuvenators can be used with RAP in asphalt mixtures with or without virgin asphalt binder. RAP mixtures, particularly those with higher percentages of RAP, have shown poorer performance in terms of fatigue and transverse cracking in comparison with virgin mixtures, in part due to incomplete mixing of the RAP binder, and perhaps ineffective rejuvenation. Some workers in the field have questioned whether RAP and RAS (recycled asphalt shingles) can be rejuvenated, and if mixtures containing highly oxidized RAP or RAS age more quickly.

US 2010/0170417 discloses the use of extenders in cutback asphalt compositions (asphalt and solvents) wherein the extenders comprise renewable materials and particularly tall oil products.

US 2013/053882 discloses a method of improving the incorporation of recycled bituminous products by using at least one surfactant as an alternative to the known rejuvenating oils, for the preparation of asphalt mixes containing recycled bituminous products.

US 2014/003951 discloses the use of a fatty acid ester obtained from esterified plant oil to reuse bitumen in construction materials.

It would be desirable to provide methods of preparing recycled asphalt compositions, and compositions of recycled asphalt and rejuvenating oil for use in the preparation of asphalt pavement, wherein the amount of virgin binder can be reduced relative to prior art recycled asphalt compositions.

It further would be desirable to provide methods of preparing recycled asphalt compositions, and compositions of recycled asphalt and rejuvenating oil for use in the preparation of asphalt pavement which methods and compositions provide good softening of the aged binder on the recycled asphalt material.

It further would be desirable to provide methods of preparing recycled asphalt compositions, and compositions of recycled asphalt and rejuvenating oil for use in the preparation of asphalt pavement, which methods and compositions provide improved penetration of the rejuvenating oil in the aged binder on the recycled asphalt material.

It further would be desirable to provide methods of preparing recycled asphalt compositions, and compositions of recycled asphalt and rejuvenating oil for use in the preparation of asphalt pavement, which methods and compositions provide pavement with improved aging characteristics.

### Summary of the Invention

In accordance with the invention, a method of preparing a recycled asphalt product for use in pavement comprises providing a quantity of recycled asphalt material, and mixing the recycled asphalt material with a rejuvenating composition comprising a portion of rejuvenating oil and a portion of an alkoxylated fatty amine surfactant, the resulting product being suitable for use in the manufacture of asphalt pavement. In one embodiment the recycled asphalt and the rejuvenating composition is in contact for a period of time sufficient to allow the rejuvenating composition to penetrate through at least some aged binder that is present on the recycled asphalt material.

The invention further provides a composition for use in the manufacture of pavement comprising recycled asphalt and, the composition comprising a portion of a rejuvenating oil and a portion of an alkoxylated fatty amine surfactant. The rejuvenating oil can be selected from either petroleum based oils or sustainable oils, with sustainable oils being preferred. Suitable oils include naphthenic oils, paraffin oils, fatty acid esters, and organic oils such as tall oil, palm oil, soybean oil, cashew nut shell oil and organic oil pitch, and mixtures thereof. The alkoxylated fatty amine can be selected from ethoxylated, propoxylated, and butoxylated amines, and mixtures thereof. Ethoxylated fatty amines are preferred.

### Description of the Figures

Fig. 1 illustrates the improvement in aged penetration retention achieved by replacing 20% recycling oil with an ethoxylated fatty amine surfactant for four different oils.
Fig. 2 illustrates a comparison of the effect of surfactant on aged penetration retention by replacement of 20% recycling oil with an ethoxylated fatty amine surfactant for 3 different oils.
Fig. 3 illustrates the change in carbonyl and sulfoxide peak areas ratios in a neat asphalt binder upon extended aging in a rolling thin film oven.
Fig. 4 illustrates the change in carbonyl index after a second aging step for a hydrocarbon oil series.

### Detailed Description of the Invention

In one aspect the invention relates to a method of preparing an asphalt pavement product from a recycled asphalt material. The recycled asphalt material can comprise recycled asphalt pavement (RAP), recycled asphalt shingles (RAS), or a mixture thereof. The recycled asphalt material can be crushed for use in a paving mix that optionally can include a portion of virgin asphalt. The recycled asphalt material may include aged binder that remains on the recycled asphalt. It is known to use rejuvenating oils to soften the aged binder, but rejuvenating oils alone do not prevent further aging of the aged binder on the recycled asphalt material. This aged binder can impair the performance properties of pavement made from the recycled asphalt material.

In accordance with the invention, the recycled asphalt material is mixed with a rejuvenating composition comprising rejuvenating oil and an alkoxylated fatty amine surfactant.

In one embodiment the rejuvenating oil can be a petroleum based oil, such as naphthenic oils.

In one embodiment the rejuvenating oil can be sustainably sourced oil such as a vegetable-based oil. Suitable plant oils can include tall oil, corn oil, canola oil, soy oil, biodiesel oils, nut oils, nut shell oils, nut shell liquids, and nut shell liquid pitch. Cashew nut shell liquid and cashew nut shell liquid pitch may be particularly suited to the present invention.

The foregoing petroleum based oils and sustainable oils can be used alone or in any combination.

The rejuvenating oil is used in conjunction with a surfactant that comprises an alkoxylated fatty amine. The term "fatty amine" as used herein includes amines, diamines, and polyamines. The fatty amine can be an ethoxylated fatty amine, a propoxylated fatty amine, a butoxylated fatty amine, and mixtures of any of the foregoing. In some embodiments a surfactant can include different alkylene oxide monomers; for example, a single surfactant molecule can include both ethylene oxide and propylene oxide monomers. Especially preferred are the ethoxylated fatty amines. Preferred surfactants for use in the present invention exhibit good asphaltene dispersant properties.

The rejuvenating composition comprising oil and surfactant preferably is present at about 0.1 - 2.5% w/w, preferably about 0.2 - 1.0% w/w, based on the total amount of recycled asphalt pavement and recycled asphalt shingle material.

In one embodiment, the surfactant can be present in the rejuvenator composition at a concentration of about 10-30% w/w, preferably at a concentration of about 18-22% w/w, and more preferably at a concentration of about 20% w/w of the rejuvenating oil.

In accordance with the one embodiment of the invention, the inventive rejuvenating composition can be mixed with an amount of virgin asphalt binder, which binder mixture is then added to an asphalt mixture containing at least a portion of recycled asphalt material.

One method to qualify asphalt additives for hot in place recycling uses the penetration test and the modified rolling thin film oven test; this method has been adopted by the Illinois Department of Transportation (IDOT). In this method, a simulated RAP binder is prepared using an extended RTFO (rolling thin film oven) procedure. The binder properties are restored by adding a rejuvenator, and then the rejuvenator-binder mixture is aged again in the RTFO. The properties of the aged rejuvenator-binder mixture are then tested using the penetration test. This method provides a way to compare rejuvenating compositions both in terms of their softening ability and in terms of their ability to maintain the softening after further aging. Other studies (Zaumanis, M, Mallick, RB, Frank, R. "Evaluation of Rejuvenator's Effectiveness with Conventional Mix testing for 100% RAP Mixtures", Presented at the 92nd Annual Meeting of the Transportation Research Board, Washington, D.C. (2013)) have looked at the effectiveness of different recycling oils in RAP mixtures, by testing the softening efficiency and penetration index which correlated with mixture properties, including at low temperatures. However, to the Examples herein evaluate the effectiveness of rejuvenators not just at softening RAP binders but also for their ability to maintain the rejuvenation after further aging, which may be a better indicator of performance.

In the Examples herein rejuvenation systems were evaluated using the IDOT procedure. The Examples show a clear benefit in retained penetration ratio with the oil-surfactant blends over the oils alone, for those surfactants with good asphaltene dispersant properties.

Some of the binder samples were analyzed by Fourier-transform infrared spectrometer (FTIR) to determine if there were any oxidative effects during rejuvenation and re-aging. Changes in the concentration of carbonyl functional groups were measured to see if there was any correlation with the observed physical property changes. Oxidation of asphalt binder results in an increased concentration of carbonyl and sulfoxide functional groups, which can be measured by FTIR.

### EXAMPLES

Samples were prepared as per Illinois DOT procedure which includes the following steps:
1. Measure the penetration of a PG58 binder (method calls for PG58-22).
2. Age the neat binder in the rolling thin film oven (RTFO) at 163°C, 4 liters per minute air, for 5 hours. The standard performance grading (PG) method ages the sample for 85 minutes at same conditions.
3. Measure the penetration at 25°C of the neat aged binder (A).
4. Blend rejuvenator into the aged binder at a dosage up to 20%.
5. Measure the penetration of the rejuvenator-aged binder mixture; the target penetration is the same as the neat unaged binder. This step is used to determine rejuvenator dosage and to calculate softening efficiency. For the samples tested we used a dosage of 9-10%.
6. Age the rejuvenator-aged binder mixture in the RTFO as in step 2.
7. Measure the penetration at 25°C of the aged rejuvenator-aged binder mixture (B).
8. Calculate the Aged Penetration Retention in percent as: (B/A) x 100. The aged penetration ratio is used to compare examples.

The term "rejuvenator" as used herein means the rejuvenating oil used alone or with a surfactant, as set forth for each Example.

The softening efficiency of the rejuvenators is calculated from the penetration of the aged binder blended with rejuvenator (step 5 above) and penetration of the neat aged binder (step 3 above). The softening efficiency is the difference in the penetration of the aged binder-rejuvenator mixture and the penetration of neat aged binder divided by the rejuvenator dosage in percent.

The penetration was measured by ASTM D5. Samples were tested at 25°C.

Selected samples were tested on a dynamic shear rheometer (DSR) using procedures for performance grading (PG) of asphalt binder (ASTM D7175 and D6373).

In most of the Examples herein the concentration of the rejuvenators with respect to the asphalt binder weight was constant. In Examples 3, 5, 7 and 9 the rejuvenators were 10% of the asphalt binder weight; while 9% rejuvenator was used based on the binder weight in the Examples of Table 2, 3, and 4. The surfactants were blended with the recycling oils in a 20:80 ratio by weight. The same total amount of rejuvenator was used for the oils and the oil-surfactant blends.

The asphalt binder used herein was a PG58-28. The recycling oils used include tall oil fatty acids, a biosolvent, a soy based biodiesel, cashew nut shell derivatives, a commercial bio-based rejuvenator and a naphthenic hydrocarbon oil. The surfactants tested include two amine based cationic surfactants and one cationic-nonionic surfactant blend. In addition, one wax-based additive was tested.

### FTIR Sample Preparation and Analysis

The infrared spectra were recorded with a Thermo Nicolet Nexus 670 spectrometer equipped with a Harrick FastIR Attenuated Total Reflectance (ATR) accessory with ZnSe crystal. The FTIR samples were prepared by pouring the asphalt binders onto silicone wafers to create a flat surface on the bottom of the sample and pressing each with a SEM (scanning electron microscope) pin stub mount for handling. Using the mount, the samples were peeled from the silicone and transferred to the surface of the ZnSe crystal. The samples were pressed down onto the crystal to ensure good contact with the crystal. Fifty scans were collected at 4 cm⁻¹ resolution.

The carbonyl (C=O) and sulfoxide (S=O) functional indices were calculated from the band areas measured valley to valley for the respective peaks at 1695 and 1031 cm⁻¹ taken as a ratio to the band area of the C-H deformation at 1456 cm⁻¹.

The hydrocarbon oil data set was analyzed by FTIR and the samples were analyzed in triplicate. This dataset was chosen because the hydrocarbon oil had less interfering absorbance in the carbonyl region of the FTIR spectrum than the bio-based oils, thus allowing for better quantification of oxidized species.

### Penetration Results

The test results are shown in Table 1 for neat and treated samples. Surfactant 1 is an ethoxylated fatty amine. After the extended RTFO aging, the neat binder is significantly aged and hardened. The penetration is reduced from 136 dmm to 33- 35 dmm and the DSR results show that the upper PG has changed from PG58 to PG82. This result is in the upper PG range for an extracted RAP binder, which generally ranges from PG76 to PG94.

Table 1 shows the penetration value of the aged binder after the addition of 10 weight% of the additive. The aged penetration column shows the penetration after addition of the additive and after the second aging step. The aged penetration retention is calculated as described in the method section.

Looking at the softening efficiency column in Table 1, one can compare the ability of rejuvenating additives to raise the penetration of the aged binder from the first aging step (penetration 33-35) in terms of change in penetration for the dosage of the rejuvenator. Based on the softening efficiencies, the distilled cashew nut shell liquid (CNSL), biodiesel and Surfactant 1 with biodiesel softened the aged binder most effectively. Some additives softened the aged binder well, but the softening was not maintained after the second aging step, as shown by the aged penetration retention. For example, biodiesel worked well at softening the aged binder to a penetration 183 dmm, but had a low penetration (26 dmm) after the second aging step. Some of the rejuvenating oils show weight loss under standard RFTO conditions, and part of the hardening after the second aging step could result from loss of volatiles.

In Table 1, the rejuvenators are listed in order of effectiveness based on aged penetration retention, from most to least effective. Based on the aged penetration retention, which measures the penetration retained after treatment with rejuvenator and the second aging step, the most effective rejuvenator is the blend of CNSL with Surfactant 1. Clearly, the CNSL oil itself has a strong influence on rejuvenation since the aged penetration value for the CNSL is already high, but the addition of the surfactant enhances the effect. The same trend is seen with the other oils.

For the additives with aged penetration retention values over 100%, a lower dose of additive would likely be effective in rejuvenation. Prior test results suggest that the CNSL + Surfactant 1 blend would meet the IDOT aged penetration retention specification at 8-9% additive. Further tests would be needed to determine the minimum dose of additives needed to retain the binder properties after aging.

A batch of the neat aged binder was re-aged without a rejuvenator (neat aged-aged binder). The penetration was reduced to 22 dmm from 33 dmm.

Neither the commercial bio-based rejuvenator nor the wax additive performed well compared to the surfactant blends.

**Table 1. Comparison of Potential Rejuvenators**

| Ex. | Component | Rejuvenating oil | Penetration at 25°C, dmm | Softening Efficiency @ 25°C, Δpen/dose, % | Aged Penetration, dmm | Aged Penetration Retention (%) |
|---|---|---|---|---|---|---|
| 1 | Neat Unaged PG58-28 | | 136 | NA | NA | NA |
| 2 | Neat aged binder | No additive | 33-35 | NA | 22(a) | 69 |
| 3 | Surfactant 1 | CNSL | 178 | 14.3 | 69 | 197 |
| 4 | | CNSL | 189 | 15.4 | 53 | 151 |
| 5 | Surfactant 1 | Biosolvent | 104 | 6.9 | 47 | 135 |
| 6 | | Biosolvent | 112 | 7.7 | 38 | 109 |
| 7 | Surfactant 1 | CNSL pitch | 99 | 6.4 | 38 | 109 |
| 8 | | Tall oil fatty acid | 104 | 6.9 | 38 | 108 |
| 9 | Surfactant 1 | Biodiesel | 207 | 17.2 | 35 | 100 |
| 10 | | CNSL Pitch | 93 | 5.8 | 32 | 91 |
| 11 | | Biodiesel | 183 | 14.8 | 26 | 75 |
| 12 | Commercial bio-based rejuvenator | | 80 | 4.5 | 25 | 73 |
| 13 | Hydrocarbon wax | | 32 | -0.3 | 23 | 65 |

| | | | | | | |
|---|---|---|---|---|---|---|
| (a) binder was subjected to two ageing treatments, without rejuvenator | | | | | | |

The data of Table 1 demonstrate a clear benefit in retained penetration retention with the oil/surfactant blends over the oils alone. In each case in which a potential rejuvenating oil was tested alone and also blended with Surfactant 1, the results showed the mixture to be a more effective rejuvenator than the oil alone.

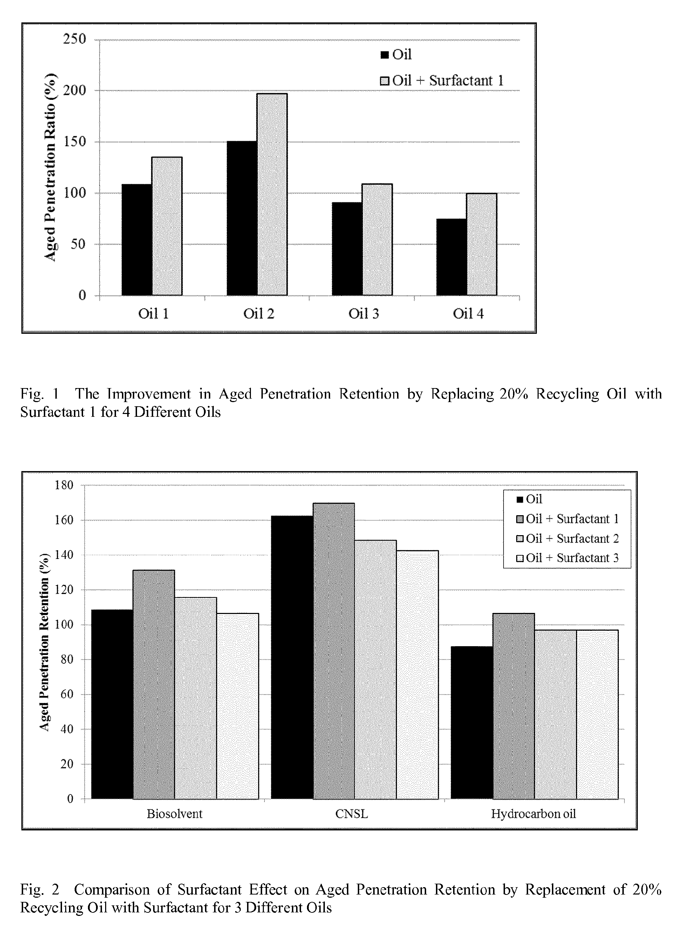

Figure 1 shows the aged penetration retentions for the PG58 asphalt binder modified with 4 different recycling oils and also modified with blends of the recycling oils in which 20% of the oil was replaced with surfactant 1. The dosage of recycling oil and recycling oil blends was 10 weight % based on the aged asphalt binder. Oil 1 is a biosolvent, oil 2 is distilled cashew nut shell liquid, oil 3 is cashew nut shell liquid pitch and oil 4 is biodiesel. The aged penetration retentions were 20-33% higher for the modified binders with the recycling oil-surfactant blends compared to the binders modified with recycling oil alone.

Table 2 shows the data for the three different surfactant oil blends using a commercial bio-based solvent. Surfactants 2 and 3 contain polyamine condensates typical of those used in asphalt adhesion promoters. The total dosage of the rejuvenating oil and the rejuvenating oil-surfactant blends was 9% based on the asphalt binder weight for all samples in these experiments. Surfactant 1 comprising an ethoxylated fatty amine was found to improve the aged penetration ratio more than the other two surfactants in this recycling oil, where the other two surfactants did not contain an ethoxylated fatty amine.

**Table 2. Comparison of Surfactant- Rejuvenator Test Results, Softening Efficiency and Aged Penetration Retention, follow-up study with Biosolvent as Rejuvenating Oil Base.**

| Ex. | Component | Rejuvenating oil | Penetration at 25°C, dmm | Softening Efficiency @ 25°C, Δpen/dose | Aged Penetration, dmm | Aged Penetration Retention (%) |
|---|---|---|---|---|---|---|
| 14 | Neat PG58-28 | | 136 | NA | NA | NA |
| 15 | Neat Aged Binder | | 32 | NA | NA | NA |
| 16 | Surfactant 1 | Biosolvent | 96 | 7.1 | 42 | 131 |
| 17 | Surfactant 2 | Biosolvent | 90 | 6.4 | 37 | 116 |
| 18 | Surfactant 3 | Biosolvent | 91 | 6.6 | 34 | 106 |

Table 3 shows the data for the three surfactant oil blends using cashew nut shell liquid as the oil base. Surfactant 1 was found to improve the aged penetration retention more than the other two surfactants in this oil as well. Note that although CNSL on its own softened the binder more than the blend with Surfactant 1 (softening efficiency) the aged penetration retention was highest for the blend with Surfactant 1 present.

**Table 3. Comparison of Surfactant-Rejuvenator Test Results, Softening Efficiency and Aged Penetration Retention, follow-up study with CNSL distillate as oil base.**

| Ex. | Component | Rejuvenating Oil | Penetration at 25°C, dmm | Softening Efficiency @ 25°C, Δpen/dose% | Aged Penetration, dmm | Aged Penetration Retention (%) |
|---|---|---|---|---|---|---|
| 19 | Neat PG58-28 | | 136 | NA | NA | NA |
| 20 | Neat Aged Binder | | 33 | NA | NA | NA |
| 21 | | CNSL | 185 | 16.9 | 52 | 163 |
| 22 | Surfactant 1 | CNSL | 152 | 13.2 | 56 | 170 |
| 23 | Surfactant 2 | CNSL | 140 | 11.9 | 49 | 148 |
| 24 | Surfactant 3 | CNSL | 136 | 11.4 | 47 | 142 |

Table 4 shows the data for the three surfactant oil blends using a commercial hydrocarbon recycling oil. Surfactant 1 improved the aged penetration retention more than the other two surfactants in this oil too. This oil had the lowest softening efficiency of the three oils tested. Part of the reason it was selected for testing was because it has a low absorbance in the regions of interest in the FTIR spectrum.

**Table 4. Comparison of Surfactant-Rejuvenator Test Results, Softening Efficiency and Aged Penetration Retention, follow-up study with Hydrocarbon Oil as Rejuvenating Oil Base.**

| Ex. | Component | Rejuvenating Oil | Penetration at 25°C, dmm | Softening Efficiency @ 25C, Δpen/dose% | Aged Penetration, dmm | Aged Penetration Retention (%) |
|---|---|---|---|---|---|---|
| 25 | Neat PG58-28 | | 136 | NA | NA | NA |
| 26 | Neat Aged Binder | | 33 | NA | NA | NA |
| 27 | | Hydrocarbon oil | 54 | 2.4 | 28 | 88 |
| 28 | Surfactant 1 | Hydrocarbon oil | 64 | 3.6 | 34 | 106 |
| 29 | Surfactant 2 | Hydrocarbon oil | 54 | 2.4 | 31 | 97 |
| 30 | Surfactant 3 | Hydrocarbon oil | 57 | 2.8 | 31 | 97 |

Figure 2 compares the aged penetration retentions for the three follow-up studies with the oil and surfactant blends in Tables 2-4. For all three oils, the aged penetration retentions were improved most when blended with Surfactant 1. For the biosolvent, Surfactants 1 and 2 showed an improvement over the oil alone, but Surfactant 1 showed an increase of 20% while Surfactant 2 showed a 6% increase. For CNSL, only Surfactant 1 improved the aged penetration retention over the oil alone, by 4%. For the hydrocarbon oil, all three surfactants improved the aged penetration retention over the oil alone. Surfactant 1 gave a 21% increase, while the other two surfactants gave an 11% increase. So, of all the rejuvenators tested, Surfactant 1 consistently outperformed the other surfactants and also enhanced the performance of all the oils tested.

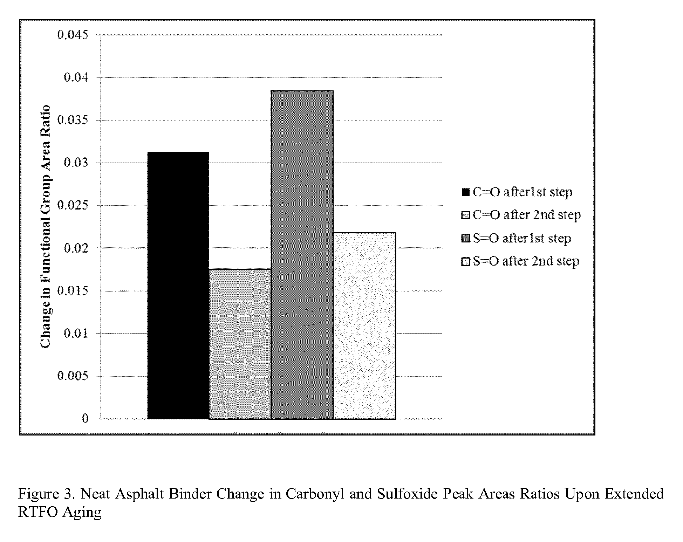

Figure 3 shows the change in the carbonyl and sulfoxide functional indices with extended aging in the RTFO. While the concentration of both groups increased during each of the aging steps, the rate of aging was slower for the second aging step. This is consistent with the change in penetration for the neat binder shown in Table 1.

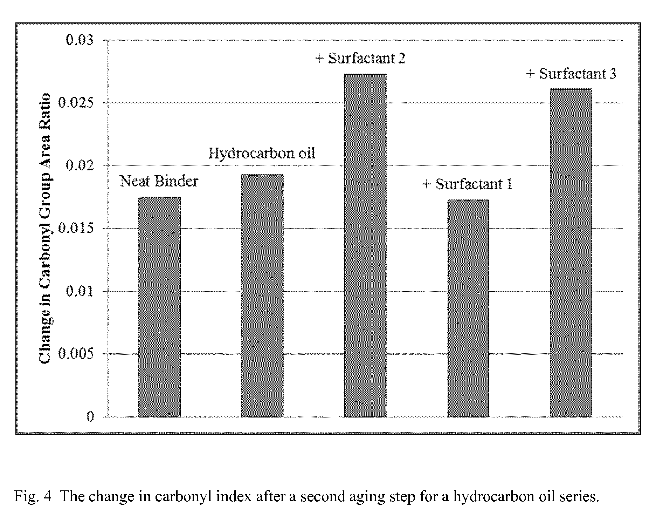

Figure 4 shows the change in the carbonyl peak area ratio from the second aging step for the series of tests with the hydrocarbon oil with and without surfactants. The blends with Surfactants 2 and 3 had a larger increase in the carbonyl index upon aging than the blend with Surfactant 1, the neat binder and the hydrocarbon oil alone. The Surfactant 1 blend had the smallest change in carbonyl index of the set. These results suggest that Surfactants 2 and 3 may promote oxidative binder aging and that Surfactant 1 has a neutral effect or a marginal benefit in terms of binder aging.

The data demonstrate a consistent improvement in the aged penetration retention of aged asphalt binder samples when a cationic amine-based surfactant was blended with the aged binder and the rejuvenating oil. Without being bound by theory, at the present time it is believed that this could be the result of reduced oxidation, or of improved asphaltene dispersion.

Oxidation of asphalt binder reduces the concentration of the lighter fractions in asphalt and increases the amount of heavier components including the asphaltenes. The FTIR data do not evidence significant reduction in oxidation, which suggests that the mechanism may be due to a dispersion effect rather than an oxidative one. The data do show that surfactants have different effects on the formation of carbonyl species during asphalt binder aging.

The data indicate that amine surfactants may be dispersing the asphaltenes and thereby limiting some of the resultant increase in viscosity in the aged binder.

The results show that surfactants can be used to further enhance the rejuvenating performance of recycling oils. Those skilled in the art will recognize that careful matching of the oil and surfactant can optimize performance.

Advantageously, many of the surfactants and rejuvenating oils that find utility in the present invention are based on renewable materials.

## Claims

1. A method of preparing a pavement product comprising a recycled asphalt material, the method comprising
providing a quantity of crushed recycled asphalt material,
mixing the recycled asphalt material with a rejuvenating composition comprising
a portion of a rejuvenating oil, and
a portion of an alkoxylated fatty amine surfactant,
wherein the resultant mixture is suitable for use in the manufacture of an asphalt pavement.

2. The method of claim 1 wherein the recycled asphalt material is selected from recycled asphalt pavement, recycled asphalt shingles, and mixtures thereof.

3. The method of any one of claims 1 to 2 wherein the rejuvenating oil is selected from petroleum based oils and plant based oils.

4. The method of any one of claims 1 to 3 wherein the rejuvenating oil is a naphthenic oil.

5. The method of any one of claims 1 to 3 wherein the rejuvenating oil is selected from compositions of fatty acid esters, tall oil, corn oil, canola oil, soy oil, biodiesel oils, nut oils, nut shell oils, nut shell liquids, and nut shell liquid pitch.

6. The method of claim 5 wherein the rejuvenating oil is selected from cashew nut shell liquid and cashew nut shell liquid pitch.

7. The method any one of claims 1 to 6 wherein the surfactant is an ethoxylated fatty amine.

8. The method of any one of claims 1 to 7 wherein the surfactant comprises about 10-30% w/w of the rejuvenating composition.

9. The method of any one of claims 1 to 8 wherein the surfactant comprises about 18-22% w/w of the rejuvenating composition.

10. The method of any one of claims 1 to 9 wherein the surfactant comprises about 20% w/w of the rejuvenating composition.

11. The method of any one of claims 1 to 10 wherein the rejuvenating composition is mixed with a virgin asphalt binder.

12. The method of any one of claims 1 to 11 wherein the binder mixture is added to the asphalt at about 5-20% by weight.

13. A composition for use in the preparation of a pavement product comprising recycled asphalt, the composition comprising a rejuvenating oil and at least about 20% of an alkoxylated fatty amine surfactant.

14. The composition of claim 13 wherein the rejuvenating oil is selected from compositions of fatty acid methyl esters, naphthenic oil, tall oil, corn oil, canola oil, soy oil, biodiesel oils, nut oils, nut shell oils, nut shell liquids, and nut shell liquid pitch.

15. The composition of any one of claims 13 to 14 wherein the surfactant is an ethoxylated fatty amine.
